# EUROPEAN PATENT APPLICATION

(11) **EP 4 506 483 A1**
(43) Date of publication of application: **12.02.2025**
(21) Application number: 24790806.4
(22) Date of filing: 13.05.2024
(51) Int. Cl.: C22C 38/14, C21D 6/04, C21D 8/00

(54) **MARAGING STEEL, PREPARATION METHOD FOR MARAGING STEEL AND ELECTRONIC DEVICE**

(30) Priority: 12.06.2023 CN 202310694134
(71) Applicant: Huawei Technologies Co., Ltd., Shenzhen, Guangdong 518129 (CN); China Iron and Steel Research Institute Group Co., Ltd., Beijing 100081 (CN)
(72) Inventor: LI, Yong, Haidian District, Beijing 100081 (CN); WANG, Chunxu, Haidian District, Beijing 100081 (CN); GENG, Ruming, Haidian District, Beijing 100081 (CN); HAN, Shun, Haidian District, Beijing 100081 (CN); LEI, Simin, Haidian District, Beijing 100081 (CN); LIU, Yu, Haidian District, Beijing 100081 (CN); CAI, Ming, Shenzhen, Guangdong 518129 (CN); LIN, Sen, Shenzhen, Guangdong 518129 (CN)
(74) Representative: Thun, Clemens
(86) International application number: PCT/CN2024/092750
(87) International publication number: WO 2024/255498

(57) **Abstract**

Embodiments of this application provide a maraging steel, a method for preparing a maraging steel, and an electronic device. The maraging steel includes the following alloy elements: Co, Mo, and Ti. By weight percentage, content of Co ranges from 12 wt% to 17 wt%, content of Mo ranges from 6 wt% to 8 wt%, and content of Ti ranges from 0.4 wt% to 1.5 wt%. The maraging steel further includes the following alloy elements: Ni, Al, Fe, and an impurity element. By weight percentage, content of Ni ranges from 15 wt% to 18 wt%, Al≤0.3 wt%, and the remainder is Fe and the impurity element. Embodiments of this application provide the maraging steel, the method for preparing a maraging steel, and the electronic device, so that the maraging steel can have both a high strength and high plasticity.

## Description

This application claims priority to Chinese Patent Application No. 202310694134.7, filed with the China National Intellectual Property Administration on June 12, 2023 and entitled "MARAGING STEEL, METHOD FOR PREPARING MARAGING STEEL, AND ELECTRONIC DEVICE", which is incorporated herein by reference in its entirety.

### TECHNICAL FIELD

Embodiments of this application relate to the field of alloy steel technologies, and more specifically, to a maraging steel, a method for preparing a maraging steel, and an electronic device.

### BACKGROUND

A maraging steel is an ultra-high strength steel that uses iron-nickel-based martensite as a matrix. Due to good plasticity of the maraging steel, the maraging steel is widely used in the fields of aerospace, instruments and devices, tools and machinery, and the like. High-content Ni and Ti elements are added to an existing maraging steel to strengthen a material by using a precipitate, namely, an intermetallic compound Ni₃Ti. However, during a smelting process of the material, Ti is prone to reaction with an impurity element N to generate TiN inclusions, and the TiN inclusions further lead to reduction in plasticity of the material. As a result, as a strength of the maraging steel improves, plasticity also decreases significantly, which greatly limits an application scope of the maraging steel and reduces reliability of application safety of the maraging steel.

### SUMMARY

Embodiments of this application provide a maraging steel, a method for preparing a maraging steel, and an electronic device, so that the maraging steel can have both a high strength and high plasticity.

According to a first aspect, a maraging steel is provided. The maraging steel includes the following alloy elements: Co, Mo, and Ti. By weight percentage, content of Co ranges from 12 wt% to 17 wt%, content of Mo ranges from 6 wt% to 8 wt%, and content of Ti ranges from 0.4 wt% to 1.5 wt%.

In an embodiment provided in this application, the content of Ti is controlled, so that large-size Ti inclusions in the maraging steel can be reduced, to prevent the large-size Ti inclusions from reducing plasticity of the steel. In addition, the content of Co and the content of Mo are increased, which can compensate for a strength loss of the maraging steel caused by reduction in the content of Ti, so that the maraging steel can have good comprehensive mechanical properties, that is, have both a high strength and high plasticity.

With reference to the first aspect, in some implementations of the first aspect, the maraging steel further includes the following alloy elements: Ni, Al, Fe, and an impurity element. By weight percentage, content of Ni ranges from 15 wt% to 18 wt%, Al≤0.3 wt%, and the remainder is Fe and the impurity element.

In an embodiment provided in this application, the content of Al is controlled to be low, so that generation of large-size inclusions such as AlN can be reduced, to avoid adverse impact on plasticity of the maraging steel. In addition, the content of Ni is controlled to be appropriate, so that the maraging steel can have both a high strength and high plasticity.

With reference to the first aspect, in some implementations of the first aspect, the impurity element includes one or more of the following elements: C, Mn, O, S, N, and P. By weight percentage, content of the impurity element is: C≤0.01 wt%, Mn≤0.01 wt%, total oxygen T.O content≤0.0015 wt%, S≤0.0020 wt%, N≤0.0015 wt%, and P≤0.0050 wt%.

In an embodiment provided in this application, the content of the impurity element is controlled to be low, so that adverse impact of the impurity element on plasticity of the maraging steel can be avoided, and the maraging steel can have both a high strength and high plasticity.

With reference to the first aspect, in some implementations of the first aspect, a tensile strength of the maraging steel is greater than or equal to 2500 MPa, and a yield strength is greater than or equal to 2500 MPa.

With reference to the first aspect, in some implementations of the first aspect, an elongation rate of the maraging steel is greater than or equal to 12%.

With reference to the first aspect, in some implementations of the first aspect, a reduction of area of the maraging steel is greater than or equal to 60%.

According to a second aspect, a method for preparing a maraging steel is provided, and is used to prepare the maraging steel according to any one of the first aspect or the possible implementations of the first aspect. The preparation method includes: weighing, based on designed composition, metallic single-element raw materials corresponding to alloy elements, and smelting and casting the metallic single-element raw materials; performing a plurality of forgings on a steel ingot obtained through casting, where an overall forging ratio obtained after the plurality of forgings is greater than or equal to 10; and performing deep cryogenic treatment and aging treatment on the steel ingot obtained through the plurality of forgings.

In an embodiment provided in this application, the plurality of forgings are performed on the cast ingot obtained through smelting and casting, and the overall forging ratio obtained after the plurality of forgings is greater than or equal to 10, so that an internal structure of the maraging steel can be refined, and both a strength and plasticity of the maraging steel can be improved. Mechanical properties of the maraging steel can be further optimized through the deep cryogenic treatment and the aging treatment.

With reference to the second aspect, in some implementations of the second aspect, a temperature of a last forging process in the plurality of forgings ranges from 750°C to 1050°C.

In an embodiment provided in this application, the temperature of the last forging process in the plurality of forgings ranges from 750°C to 1050°C, so that the internal structure of the maraging steel can be further refined, and both a strength and plasticity of the maraging steel can be improved.

With reference to the second aspect, in some implementations of the second aspect, a temperature of the deep cryogenic treatment is lower than -73°C, and is maintained for 1 h to 10 h.

In an embodiment provided in this application, the deep cryogenic treatment is performed on the steel ingot at a temperature lower than -73°C, and the temperature is maintained for 1 h to 10 h, so that plasticity of the steel can be effectively improved without reducing the strength of the steel.

With reference to the second aspect, in some implementations of the second aspect, a heating temperature of the aging treatment ranges from 450°C to 530°C, and is maintained for 3 h to 10 h.

In an embodiment provided in this application, the steel ingot is heated to 450°C to 530°C, and the temperature is maintained for 3 h to 10 h, to perform the aging treatment, so that the steel ingot can have both a high strength and high plasticity.

With reference to the second aspect, in some implementations of the second aspect, the smelting the raw materials includes: smelting the raw materials in one or more of the following manners: converter smelting, out-of-furnace refining, vacuum induction melting, vacuum arc remelting, and electro-slag remelting.

In an embodiment provided in this application, the metallic raw materials are smelted through one or more of converter smelting, out-of-furnace refining, vacuum induction melting, vacuum arc remelting, and electro-slag remelting, so that smelting efficiency can be improved. Two or more steps of smelting are performed on the metallic raw materials, so that quality of the maraging steel can be further improved, and the mechanical properties of the maraging steel can be improved. Smelting is performed in manners of vacuum induction melting, vacuum arc remelting, and the like, so that impurity content in the maraging steel can be reduced, and adverse impact of an impurity element on plasticity of the maraging steel can be avoided.

With reference to the second aspect, in some implementations of the second aspect, before the performing a plurality of forgings on a steel ingot obtained through casting, the method further includes: performing homogenization treatment on the steel ingot obtained through casting, where a temperature of the homogenization treatment ranges from 1170°C to 1230°C.

In an embodiment provided in this application, after the steel ingot is obtained through casting, the homogenization treatment is performed on the steel ingot within a temperature range of 1170°C to 1230°C, so that an internal crystal structure of the steel can be improved, casting stress can be eliminated, and mechanical properties of the steel ingot can be optimized.

According to a third aspect, an electronic device is provided. The electronic device includes one or more parts made of the maraging steel according to any one of the first aspect or the possible implementations of the first aspect.

### BRIEF DESCRIPTION OF DRAWINGS

FIG. 1 is a schematic flowchart of a method for preparing a maraging steel according to an embodiment of this application; and
FIG. 2 is a diagram of a fracture appearance of a tensioned maraging steel sample according to an embodiment of this application.

### DESCRIPTION OF EMBODIMENTS

The following describes technical solutions of embodiments in this application with reference to accompanying drawings.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner.

Terms "include", "comprise", "have", and variations thereof all mean "including but not limited to", unless otherwise specified.

Martensite is a rigid microstructure in steels but has low plasticity. The martensite is stable at a low temperature (including a room temperature) and provides a strength for a whole material. A maraging steel is strengthened mainly through precipitation of an intermetallic compound during aging treatment, and is toughened by using film-like reverted austenite. An 18Ni series is a typical example of the maraging steel, and includes C200, C250, to C500. Table 1 shows content (by weight percentage) of main alloy elements in several typical maraging steels, including C200, C250, C300, and C350. Table 2 shows room temperature mechanical property parameters of the maraging steels C200, C250, C300, and C350. σ_{b} represents a tensile strength of a material, that is, a maximum stress value that the material bears before the material snaps in a tensile test. σ_{0.2} represents a yield strength, that is, a stress value that the material bears when a yield phenomenon occurs in the material in the tensile test. It is generally stipulated that a stress value at which 0.2% residual deformation occurs is a yield strength of a metallic material. A represents an elongation rate at break, which may also be briefly referred to as an elongation rate, that is, a ratio of a difference between a length of a gauge section after snapping of the material and an original length of the gauge section to the original length. Z represents a reduction of area, that is, a ratio of a difference between a cross-sectional area of a fracture of the material after snapping of the material and an original cross-sectional area of the fracture of the material to the original cross-sectional area.

It can be learned from Table 1 and Table 2 that, for steel types in the 18Ni series, content of Co, content of Mo, and content of Ti are increased, so that yield strengths σ_{0.2} and tensile strengths σ_{b} are continuously improved from C200 to C350. Currently, a steel type, with a highest strength, used in actual structural engineering is C350 whose σ_{b} and σ_{0.2} are approximately 2410 MPa and 2340 MPa respectively. Content of Mo in the maraging steels C250 to C350 is all 4.8%, and improvement of strengths of C250 to C350 depends on joint enhancement of Co and Ti. With an increase of the content of Ti, the strength of the maraging steel is improved, but plasticity of the maraging steel decreases significantly. An elongation rate of C350 is approximately 7%, while plasticity of C400 whose strength is higher further decreases, which greatly limits application of C400. Therefore, under a condition of increasing the strength of the maraging steel, further improving plasticity of the maraging steel is crucial to an engineering application scope and reliability of application safety of the maraging steel.

**Table 1**

| Steel type | C | Ni | Co | Mo | Ti | Al | Fe |
|---|---|---|---|---|---|---|---|
| C200 | ≤0.03 | 18.5 | 8.5 | 3.25 | 0.20 | 0.10 | Remainder |
| C250 | ≤0.03 | 18.5 | 7.5 | 4.8 | 0.40 | 0.10 | Remainder |
| C300 | ≤0.03 | 18.5 | 9.0 | 4.8 | 0.60 | 0.10 | Remainder |
| C350 | ≤0.03 | 18.5 | 12.0 | 4.8 | 1.40 | 0.10 | Remainder |

**Table 2**

| Steel type | σ_{b}/MPa | σ_{0.2}/MPa | A/% | Z/% |
|---|---|---|---|---|
| C200 | 1445 | 1420 | 12.0 | 62 |
| C250 | 1790 | 1760 | 11.0 | 58 |
| C300 | 2020 | 2000 | 11.0 | 57 |
| C350 | 2410 | 2340 | 7.0 | 35 |

Based on the foregoing problem, an embodiment of this application provides a maraging steel, which has a new alloy composition percentage, so that the maraging steel can have both a high strength and high plasticity.

The maraging steel may include the following alloy elements: Co, Mo, and Ti. By weight percentage, content of Co ranges from 12 wt% to 17 wt%, content of Mo ranges from 6 wt% to 8 wt%, and content of Ti ranges from 0.4 wt% to 1.5 wt%.

For example, by weight percentage, the content of Co may be 12 wt%, 13 wt%, 14 wt%, 15 wt%, 16 wt%, 17 wt%, or the like. For example, the content of Co may range from 14 wt% to 16 wt%, or may range from 14.5 wt% to 15.5 wt%, or may range from 14.6 wt% to 15.4 wt%, or may range from 14.7 wt% to 15.3 wt%, or may range from 14.8 wt% to 15.2 wt%, or may range from 14.9 wt% to 15.1 wt%.

For example, the content of Mo may be 6 wt%, 6.4 wt%, 6.8 wt%, 7.2 wt%, 7.6 wt%, 8 wt%, or the like. For example, the content of Mo may range from 7 wt% to 8 wt%, or may range from 7 wt% to 7.5 wt%, or may range from 6.9 wt% to 7.6 wt%, or may range from 6.8 wt% to 7.7 wt%, or may range from 6.7 wt% to 7.8 wt%.

For example, the content of Ti may be 0.4 wt%, 0.5 wt%, 0.6 wt%, 0.7 wt%, 0.8 wt%, 0.9 wt%, 1.0 wt%, 1.1 wt%, 1.2 wt%, 1.3 wt%, 1.4 wt%, 1.5 wt%, or the like. For example, the content of Ti may range from 0.5 wt% to 1.2 wt%, or may range from 0.4 wt% to 1.3 wt%, or may range from 0.3 wt% to 1.4 wt%.

In the maraging steel, Co and another element in an alloy system do not form a compound, but Co can suppress dislocation recovery in a martensite matrix, improve dislocation density of the martensite matrix, provide a nucleation site for precipitation of a second phase in the steel in a subsequent aging process, and effectively promote age strengthening reaction. In addition, Co can increase a martensite transformation start (martensite start, Ms point) temperature, and reduce a tendency for martensite to be transformed into reverted austenite, to help improve the strength of the maraging steel. The Ms point is a temperature at which a difference between free energy of an austenite phase and a martensite phase reaches a minimum driving force (critical driving force) required for phase transformation. Therefore, in this embodiment of this application, the content of Co is controlled to be high, to improve the strength of the maraging steel.

Mo and Ni may form an intermetallic compound Ni₃Mo, to strengthen the matrix. In this embodiment of this application, the content of Mo is increased to 6% to 8%, so that strong precipitation strengthening effect can be achieved, and a strength requirement of a material is met.

Ti can form Ni₃Ti in the aging process to improve the strength of the steel, but may cause a great toughness loss of the steel. In addition, when the content of Ti is excessively high, Ti is prone to combining with N in the steel to form large-size angular TiN inclusions, which results in concentration of local stress and causes generation of cracks. Therefore, in this embodiment of this application, the content of Ti is controlled to be low, to comprehensively consider the strength and plasticity of the maraging steel.

In conclusion, in this embodiment provided in this application, the content of Ti is controlled, so that the large-size Ti inclusions in the maraging steel can be reduced, to prevent the large-size Ti inclusions from damaging properties of the steel. In addition, the content of Co and the content of Mo are increased, which can compensate for a strength loss of the maraging steel caused by reduction in the content of Ti, so that the maraging steel can have good comprehensive mechanical properties, that is, have both a high strength and high plasticity.

The maraging steel may further include the following alloy elements: Ni, Al, Fe, and an impurity element. By weight percentage, content of Ni ranges from 15 wt% to 18 wt%, Al≤0.3 wt%, and the remainder is Fe and the impurity element.

For example, by weight percentage, the content of Ni may be 15 wt%, 15.5 wt%, 16 wt%, 16.5 wt%, 17 wt%, 17.5 wt%, 18 wt%, or the like. For example, the content of Ni may range from 15 wt% to 16.1 wt%, or may range from 14.9 wt% to 16.2 wt%, or may range from 14.8 wt% to 16.2 wt%, or may range from 14.7 wt% to 16.3 wt%, or may range from 14.6 wt% to 16.4 wt%.

For example, the content of Al may be 0.05 wt%, 0.1 wt%, 0.15 wt%, 0.2 wt%, 0.25 wt%, 0.3 wt%, or the like. For example, the content of Al may be less than 0.2 wt%, or may be less than 0.5 wt%, or may range from 0.1 wt% to 0.15 wt%.

In the maraging steel, Ni does not have direct strengthening effect on the martensite matrix. However, Ni is an austenite stabilized element. Ni can promote formation of the reverted austenite in the aging process, and has positive effect on improving plasticity and toughness of the maraging steel. In this embodiment provided in this application, Ni, Ti, and Mo may form specific content of Ni₃Ti and Ni₃Mo, and have precipitation strengthening function.

Al is prone to forming large-size AlN inclusions in the steel, and damage toughness and plasticity of the steel. Therefore, in this embodiment of this application, the content of Al may be controlled to not exceed 0.3 wt%.

In conclusion, in this embodiment provided in this application, the content of Al is controlled to be low, to mitigate adverse impact of generation of a compound such as AlN on plasticity of the maraging steel. In addition, the strength and plasticity of the maraging steel are comprehensively considered, to control the content of Ni to be appropriate, so that the maraging steel can have both a high strength and high plasticity.

The impurity element in the maraging steel includes one or more of the following elements: C, Mn, O, S, N, and P. By weight percentage, content of the impurity element is: C≤0.01 wt%, Mn≤0.01 wt%, total oxygen T.O content≤0.0015 wt%, S≤0.0020 wt%, N≤0.0015 wt%, and P≤0.0050 wt%.

The total oxygen (total oxygen, T.O) content is total oxygen content in the steel, including oxygen atoms in a solid solution, molecular oxygen in defects, oxygen contained in oxides in inclusions, and the like.

C has great impact on a strength of the martensite, but in the steel, C is prone to combining with Ti to form large-size TiC, which is detrimental to plasticity of the steel. S is prone to segregation in grain boundaries. Higher content of S in the steel indicates higher content of S segregating in grain boundaries, which reduces a strength of the grain boundaries, and is prone to having adverse impact on plasticity of the steel. Solid solution strengthening and cold working hardening of P in the steel are strong, and can improve the strength and hardness of the steel. However, P is prone to segregating in the grain boundaries, which causes a decrease in plasticity and toughness of the steel. N in the steel causes age hardening of the steel. The strength and the hardness of the steel increases over time, and plasticity decreases. In a solid steel, content of O that can be dissolved is extremely low. Excess O is precipitated from a liquid steel when the liquid steel is solidified, to form inclusions or foam, which affects mechanical properties, especially plasticity and toughness, of the steel. In addition, O in the steel aggravates a thermal brittleness hazard of S.

In this embodiment provided in this application, the content of the impurity element is controlled to be low, so that adverse impact of the impurity element on plasticity of the maraging steel can be avoided, and the strength and plasticity of the maraging steel are comprehensively considered.

For the maraging steel provided in this embodiment of this application, a tensile strength and a yield strength may be greater than or equal to 2500 MPa, an elongation rate may be greater than or equal to 12%, and a reduction of area may be greater than or equal to 60%. The maraging steel provided in this embodiment of this application has both a high strength and high plasticity.

The maraging steel provided in this embodiment of this application may be used in various parts and components, of products, that have high load-bearing requirements. For example, the maraging steel may be used in parts and components of an electronic device, including parts and components of a product such as a mobile phone, a folded mobile phone, a personal computer, a tablet computer, or a wearable device, or may be used in load-bearing parts and components in aerospace, instruments and devices, tools and machinery. This is not limited in this application.

An embodiment of this application further provides an electronic device. The electronic device includes one or more parts and components made of the foregoing maraging steel.

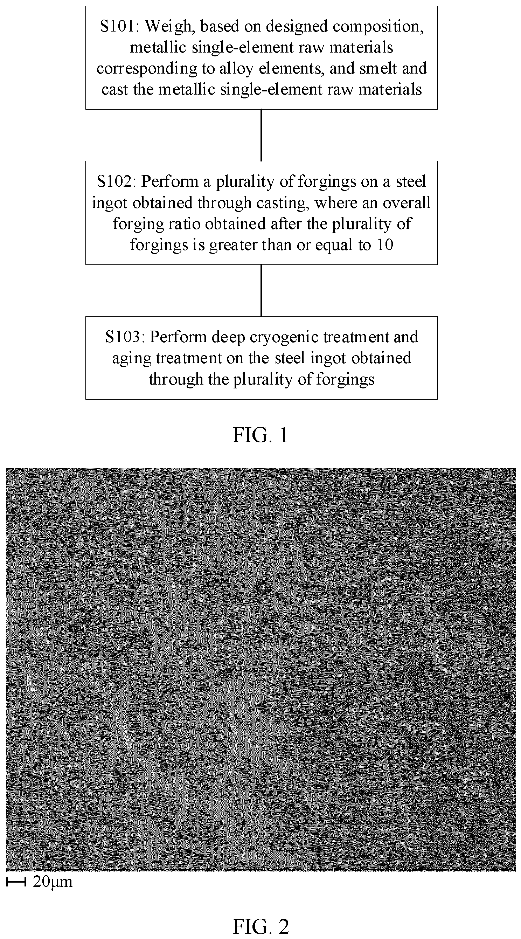

An embodiment of this application further provides a method for preparing a maraging steel. The method is used to prepare the maraging steel having the foregoing alloy element content percentage. As shown in FIG. 1, the preparation method may include steps S101 to S103.

S101: Weigh, based on designed composition, metallic single-element raw materials corresponding to alloy elements, and smelt and cast the metallic single-element raw materials.

In other words, specific mass of metallic single-element raw materials, such as a Co block, a Mo block, a Ti block, a Ni block, an Al block, and a Fe block, may be weighed based on alloy element weight content of the foregoing maraging steel, to be specific, Co ranging from 12 wt% to 17 wt%, Mo ranging from 6 wt% to 8 wt%, Ti ranging from 0.4 wt% to 1.5 wt%, Ni ranging from 15 wt% to 18 wt%, Al≤0.3 wt%, and Fe. The metallic single-element raw materials are smelted, and cast into a steel ingot, so that alloy element content in the steel ingot obtained through casting meets the foregoing percentages.

It should be noted that the metallic single-element raw materials in this embodiment of this application may not be 100% pure single-element materials, and existence of an inevitable impurity element introduced in a production and processing process is allowed. The foregoing impurity elements such as S, O, and P may be inevitable impurity elements introduced to the metallic single-element raw materials, or impurity elements introduced in a smelting atmosphere.

In some embodiments, the raw materials may be smelted in one or more of the following manners: converter smelting, out-of-furnace refining, vacuum induction melting, vacuum arc remelting, and electro-slag remelting.

Converter smelting is a process in which steelmaking may be completed, without using external energy, in a converter by using physical heat of liquid iron and heat generated by chemical reaction between components of the liquid iron, and high-pressure air or oxygen is blown into the converter to remove an impurity in the liquid iron. Out-of-furnace refining is a process of transferring the smelted liquid iron in a container, such as the converter, to another container for refining. S, O, inclusions, and the like are removed, in an inert gas or a vacuum environment, from liquid steel obtained through initial melting, to improve quality of the steel. Vacuum induction melting is a process in which eddy currents are generated through electro-magnetic induction in a vacuum environment to melt metal. Compared with smelting under normal pressure, smelting in vacuum can remove N, H, O, and C dissolved in the steel to a far lower level. Vacuum arc remelting is a smelting process in which smelting raw materials are used as an electrode in vacuum, and the smelting raw materials are gradually melted by an arc at a high temperature, dripped into a mold, and gradually condensed into a steel ingot. Melting and condensing speeds of vacuum arc remelting are fast, and alloy composition obtained through smelting is uniform. In addition, through melting in vacuum, impurity composition dissolved in the steel can be effectively removed. Electro-slag remelting is a method of smelting by using, as a heat source, resistance heat generated when currents pass through slag. For example, the steel ingot obtained through a smelting process such as converter smelting or vacuum induction melting may be refined.

The smelting process may include one or more smelting procedures. For example, the smelting process may include two smelting procedures. For example, first, initial smelting may be performed on the raw materials by using the vacuum induction melting method, and then secondary refining may be performed in the vacuum arc remelting manner or the electro-slag remelting manner, to improve purity of the steel, further reduce impurity content, improve an internal structure of the steel, and optimize mechanical properties of the steel.

S102: Perform a plurality of forgings on the steel ingot obtained through casting, where an overall forging ratio obtained after the plurality of forgings is greater than or equal to 10.

A forging ratio may also be referred to as a forging ratio, and is a ratio of a cross-sectional area of the steel before forging to a cross-sectional area of the steel after forging. That the overall forging ratio is greater than or equal to 10 means a ratio of a cross-sectional area of the steel ingot before forging to a cross-sectional area of the steel ingot after the plurality of forgings is greater than or equal to 10, or a ratio of a length of the steel ingot before forging to a length of the steel ingot after forging is greater than or equal to 10.

For example, the overall forging ratio obtained after the plurality of forgings may be 10, 11, 12, 13, 14, 15, or the like.

In some embodiments, a temperature of a last forging process in the plurality of forgings may range from 750°C to 1050°C.

For example, the temperature of the last forging process in the plurality of forging processes may be 750°C, 800°C, 850°C, 900°C, 950°C, 1000°C, 1050°C, or the like.

A billet forging temperature of the steel ingot may be less than or equal to 1220°C. In other words, a temperature at which the forging starts may be less than or equal to 1220°C, and a temperature of the steel ingot may continuously decrease in the plurality of forging processes. A quantity of the forging processes is not limited in embodiments of this application, provided that the temperature of the last forging and the overall forging ratio meet the foregoing requirement.

In this embodiment of this application, the steel ingot obtained through casting is forged, the temperature of the last forging process ranges from 750°C to 1050°C, and the overall forging ratio is greater than or equal to 10, so that the internal structure of the steel can be refined, and both a strength and plasticity of the steel can be improved.

In some embodiments, before the plurality of forgings are performed on the steel ingot obtained through casting, homogenization treatment may be performed on the steel ingot. A temperature of the homogenization treatment may range from 1170°C to 1230°C, and a time for the homogenization treatment may range from 3 h to 10 h.

For example, the temperature of the homogenization treatment may be 1170°C, 1180°C, 1190°C, 1200°C, 1210°C, 1230°C, or the like, and the time for the homogenization treatment may be, for example, 3 h, 4h, 5 h, 6 h, 7 h, 8 h, 9 h, or 10 h.

The time for the homogenization treatment may be adjusted based on a size of a sample. A larger size of the sample indicates a longer time for the homogenization treatment, to ensure that the sample is thoroughly heated, and avoid coarsening of grains of the steel caused by long-time temperature maintenance.

In this embodiment of this application, after the steel ingot is obtained through casting, the homogenization treatment is performed on the steel ingot, so that an internal crystal structure of the steel can be improved, casting stress can be eliminated, and mechanical properties of the steel ingot can be optimized.

S103: Perform deep cryogenic treatment and aging treatment on the steel ingot obtained through the plurality of forgings.

The deep cryogenic treatment is a method in which liquid nitrogen is used as refrigerant to treat the steel ingot at a low temperature.

In some embodiments, a temperature of the deep cryogenic treatment is lower than - 73°C, and is maintained for 1 h to 10 h.

For example, the temperature of the deep cryogenic treatment may be -73°C, -80°C, - 90°C, -100°C, -110°C, -120°C, -130°C, -140°C, -150°C, or the like, and may be maintained, for example, for 1 h, 2 h, 3 h, 4 h, 5 h, 6 h, 7 h, 8 h, 9 h, or 10 h.

In this embodiment of this application, the deep cryogenic treatment is performed on the steel ingot at a temperature lower than -73°C, and the temperature is maintained for 1 h to 10 h, so that plasticity of the steel can be effectively improved without reducing the strength of the steel.

The aging treatment is a heat treatment craft in which the steel ingot is placed at a high temperature to maintain a shape and a size of the steel ingot, so that properties of the steel ingot vary over time. The aging treatment craft may be performed after the deep cryogenic treatment. Before the aging treatment, the steel ingot obtained through the deep cryogenic treatment may be first heated to a room temperature in the air, and then the aging treatment is performed.

In some embodiments, a heating temperature of the aging treatment may range from 450°C to 530°C, and may be maintained for 3 h to 10 h.

For example, the temperature of the aging treatment may be 450°C, 460°C, 470°C, 480°C, 490°C, 500°C, 510, 520°C, 530°C, or the like, and may be maintained, for example, for 3 h, 4 h, 5 h, 6 h, 7 h, 8 h, 9 h, or 10 h.

The temperature maintaining time may be a time for maintaining a preset temperature after the steel ingot is heated to the temperature. That the temperature is maintained for 3 h to 10 h may mean that the temperature is maintained for 3 h to 10 h after the steel ingot is heated to the preset temperature and is thoroughly heated. After the aging treatment, the steel ingot may be placed in the air and cooled to the room temperature to obtain the required maraging steel.

In this embodiment of this application, the steel ingot is heated to 450°C to 530°C, and the temperature is maintained for 3 h to 10 h, to perform the aging treatment, so that the steel ingot can have both a high strength and high plasticity.

In an example, Table 3 shows alloy element content (by weight percentage) in the maraging steel obtained by using the foregoing preparation method, and content of other impurity elements meets C≤0.01 wt%, T.O≤0.0020 wt%, S≤0.0030 wt%, N≤0.0050 wt%, and P≤0.0050 wt%. Preparation crafts of a steel type 1# and a steel type 2# may be same. Specifically, after a steel ingot is obtained through smelting and casting, homogenization treatment is performed on the steel ingot at 1200°C for 5 h. Then, the steel ingot is cooled and forged. A billet forging temperature is 1150°C, a temperature of a last forging is 1000°C, and the steel ingot is forged into a Φ 12 mm (diameter: 12 mm) round bar. A sample obtained through forging is first processed to be a tensile billet, and then deep cryogenic treatment is performed. A temperature of the deep cryogenic treatment is -73°C, and is maintained for 2 h. Then, the tensile billet is heated to a room temperature in the air, and aging treatment is performed. After the tensile billet is heated to 480°C, the temperature is maintained for 6 h. Then, air cooling is performed. A difference between alloy element content of the steel type 1# and the steel type 2# may be brought about by a test environment and a test error. Table 4 shows a comparison between mechanical properties of the steel type 1# and the steel type 2# after heat treatment and mechanical properties of C200, C250, C300, and C350 in a conventional technology. Mechanical property parameters corresponding to 1#-1 and 1#-2 are mechanical property parameters in a repeated test of the steel type 1#, and mechanical property parameters corresponding to 2#-1 and 2#-2 are mechanical property parameters in a repeated test of the steel type 2#.

**Table 3**

| Steel type | Ni | Co | Mo | Ti | Al |
|---|---|---|---|---|---|
| 1# | 15.05 | 15.07 | 7.42 | 0.58 | 0.10 |
| 2# | 16.04 | 14.99 | 7.08 | 1.16 | 0.14 |

**Table 4**

| Steel type | σ_{b}/MPa | σ_{0.2}/MPa | A/% | Z/% |
|---|---|---|---|---|
| 1#-1 | 2570 | 2528 | 12.0 | 61 |
| 1#-2 | 2595 | 2523 | 13.0 | 63 |
| 2#-1 | 2548 | 2557 | 12.5 | 63 |
| 2#-2 | 2578 | 2536 | 12.0 | 62 |
| C200 | 1445 | 1420 | 12.0 | 62 |
| C250 | 1790 | 1760 | 11.0 | 58 |
| C300 | 2020 | 2000 | 11.0 | 57 |
| C350 | 2410 | 2340 | 7.0 | 35 |

It can be learned from data in Table 4 that, compared with an existing maraging steel, the maraging steel provided in this embodiment of this application has clear improvement in a strength and plasticity. Tensile strengths and yield strengths are all greater than 2500 MPa. Elongation rates are all greater than 12.0%. Reductions of area are all greater than or equal to 60%. The maraging steel provided in this embodiment of this application has both a high strength and high plasticity.

**Table 5**

| Steel type | σ_{b}/MPa | σ_{0.2}/MPa | A/% | Z/% |
|---|---|---|---|---|
| 1#-1 | 2598 | 2527 | 12.5 | 62 |
| 1#-2 | 2595 | 2523 | 12.5 | 63 |
| 2#-1 | 2621 | 2557 | 12.0 | 63 |
| 2#-2 | 2588 | 2537 | 12.5 | 60 |

In another example, Table 5 shows mechanical property parameters of the steel type 1# and the steel type 2# that are obtained through smelting and casting and then undergo different aging treatment crafts. Specifically, deep cryogenic treatment is performed on the steel type 1# and the steel type 2# after forging. A temperature of the deep cryogenic treatment is -73°C, and is maintained for 2 h. Then, the steel type 1# and the steel type 2# are heated to a room temperature in the air, and aging treatment is performed. A temperature of the aging treatment is 510°C.

Similarly, after the steel type 1# and the steel type 2# undergo aging treatment at different temperatures, tensile strengths and yield strengths may all be greater than or equal to 2500 MPa. Elongation rates may all be greater than or equal to 12%. Reductions of area may all be greater than or equal to 60%. The maraging steel has both a high strength and high plasticity.

FIG. 2 is a scanning electron microscope (scanning electron microscope, SEM) image of a tensile fracture of a maraging steel according to an embodiment of this application. It can be seen from the figure that a fracture appearance includes a large quantity of dimples, and presents a plastic fracture feature, which further proves that the maraging steel provided in embodiments of this application has good plasticity.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A maraging steel, wherein the maraging steel comprises the following alloy elements: Co, Mo, and Ti; and by weight percentage, content of Co ranges from 12 wt% to 17 wt%, content of Mo ranges from 6 wt% to 8 wt%, and content of Ti ranges from 0.4 wt% to 1.5 wt%.

2. The maraging steel according to claim 1, wherein the maraging steel further comprises the following alloy elements: Ni, Al, Fe, and an impurity element; and by weight percentage, content ofNi ranges from 15 wt% to 18 wt%, Al≤0.3 wt%, and the reminder is Fe and the impurity element.

3. The maraging steel according to claim 2, wherein the impurity element comprises one or more of the following elements: C, Mn, O, S, N, and P; and by weight percentage, content of the impurity element is: C≤0.01 wt%, Mn≤0.01 wt%, total oxygen T.O content≤0.0015 wt%, S≤0.0020 wt%, N≤0.0015 wt%, and P≤0.0050 wt%.

4. The maraging steel according to any one of claims 1 to 3, wherein a tensile strength of the maraging steel is greater than or equal to 2500 MPa, and a yield strength is greater than or equal to 2500 MPa.

5. The maraging steel according to any one of claims 1 to 4, wherein an elongation rate of the maraging steel is greater than or equal to 12%.

6. The maraging steel according to any one of claims 1 to 5, wherein a reduction of area of the maraging steel is greater than or equal to 60%.

7. A method for preparing a maraging steel, used to prepare the maraging steel according to any one of claims 1 to 6, wherein the preparation method comprises:
weighing, based on designed composition, metallic single-element raw materials corresponding to alloy elements, and smelting and casting the metallic single-element raw materials;
performing a plurality of forgings on a steel ingot obtained through casting, wherein an overall forging ratio obtained after the plurality of forgings is greater than or equal to 10; and
performing deep cryogenic treatment and aging treatment on the steel ingot obtained through the plurality of forgings.

8. The preparation method according to claim 7, wherein a temperature of a last forging process in the plurality of forgings ranges from 750°C to 1050°C.

9. The preparation method according to claim 7 or 8, wherein a temperature of the deep cryogenic treatment is lower than -73°C, and is maintained for 1 h to 10 h.

10. The preparation method according to any one of claims 7 to 9, wherein a heating temperature of the aging treatment ranges from 450°C to 530°C, and is maintained for 3 h to 10 h.

11. The preparation method according to any one of claims 7 to 10, wherein the smelting the metallic single-element raw materials comprises:
smelting the metallic single-element raw materials in one or more of the following manners:
converter smelting, out-of-furnace refining, vacuum induction melting, vacuum arc remelting, and electro-slag remelting.

12. The preparation method according to any one of claims 7 to 11, wherein before the performing a plurality of forgings on a steel ingot obtained through casting, the preparation method further comprises:
performing homogenization treatment on the steel ingot obtained through casting, wherein a temperature of the homogenization treatment ranges from 1170°C to 1230°C.

13. An electronic device, comprising one or more parts made of the maraging steel according to any one of claims 1 to 6.
